(19) Europäisches Patentamt / European Patent Office / Office européen des brevets

(11) **EP 2 342 066 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(21) Anmeldenummer: **09763884.5**

(22) Anmeldetag: **29.10.2009**

(51) Int Cl.:
**B32B 37/14** (2006.01)     **B29C 61/06** (2006.01)
**C08J 3/24** (2006.01)      **B29C 61/00** (2006.01)
**C08G 18/81** (2006.01)     **C08G 63/08** (2006.01)
**C08G 18/10** (2006.01)     **C08G 18/42** (2006.01)
**C08L 101/12** (2006.01)    **B32B 37/00** (2006.01)

(86) Internationale Anmeldenummer:
**PCT/EP2009/064286**

(87) Internationale Veröffentlichungsnummer:
**WO 2010/049486 (06.05.2010 Gazette 2010/18)**

(54) **POLYMERNETZWERK MIT DREI-FORMENGEDÄCHTNIS-EFFEKT UND DAZUGEHÖRIGE PROGRAMMIERVERFAHREN**

POLYMERIC NETWORKS WITH TRIPLE SHAPE MEMORY AND MATCHING PROGRAMMING PROCESS

RÉSEAU DE POLYMÈRE AVEC MÉMOIRE DE TRIPLE FORME ET PROCÉDÉ DE PROGRAMMATION CORRESPONDANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.10.2008 DE 102008055870**

(43) Veröffentlichungstag der Anmeldung:
**13.07.2011 Patentblatt 2011/28**

(60) Teilanmeldung:
**17158026.9**

(73) Patentinhaber: **Helmholtz-Zentrum Geesthacht Zentrum für Material- und Küstenforschung GmbH**
**21502 Geesthacht (DE)**

(72) Erfinder:
• **BEHL, Marc**
  **12207 Berlin (DE)**
• **LENDLEIN, Andreas**
  **14167 Berlin (DE)**
• **FENG, Yakai**
  **14513 Teltow (DE)**
• **ZOTZMANN, Jörg**
  **12247 Berlin (DE)**

(74) Vertreter: **Gulde & Partner Patent- und Rechtsanwaltskanzlei mbB Wallstraße 58/59 10179 Berlin (DE)**

(56) Entgegenhaltungen:
EP-A1- 1 362 872      EP-A1- 2 075 273
WO-A1-2008/019875     WO-A1-2009/095434
WO-A2-99/42528        US-A1- 2010 028 686

• I. ARVANITOYANNIS, A. NAKAYAMA, N. KAWASAKI, N. YAMAOTO: "Novel star-shaped polylactide with glycerol using stannous octate or tetraphenyl tin as catalyst: Synthesis, characterization and study of their biodegradability" POLYMER, Bd. 36, Nr. 15, 1995, Seiten 2947-2956, XP002567495 DOI: 10.1016/0032-3861(95)94344-S in der Anmeldung erwähnt

## Beschreibung

Die Erfindung betrifft ein Polymernetzwerk mit Drei-Formengedächtnis-Effekt und dazugehörige Programmierverfahren. Ferner betrifft die Erfindung ein Verfahren zur Herstellung von Schichtsystemen aus polymeren Formengedächtnis-Materialien.

## Stand der Technik und Hintergrund der Erfindung

Im Gegensatz zu Zwei-Formengedächtnis-Polymeren, die in der Literatur zusammenfassend beschrieben wurden und bei denen die Netzwerkbildung sowohl durch physikalische Wechselwirkung als auch durch kovalente Bindungen erfolgen kann, wurden Drei-Formengedächtnis-Polymere bisher nur als Netzwerke, die auf kovalent verknüpften Bindungen basieren, beschrieben [Bellin, I. et al., Polymeric triple-shape materials, PNAS (2006), 103(48), S. 18043-18047]. Solche Drei-Formen-Polymernetzwerke bestehen aus mindestens einer Sorte kovalenter Netzpunkte und mindestens zwei Sorten Schaltsegmente. In Analogie zu Zwei-Formengedächtnis-Polymernetzwerken können Drei-Formengedächtnis-Polymernetzwerke unter anderem Segmente aus Poly($\varepsilon$-caprolacton), Polyethern, Polyetherurethanen, Polyimiden, Polyetherimiden, Poly(meth)acrylate, Polyurethan, Polyvinyl-Verbindungen, Polystyrol, Polyoxymethylen oder Poly(*para*-dioxanon) enthalten. Durch Einbringen von hydrolysierbaren Gruppen wie z.B. Diglycolid, Dilactid, Polyanhydriden oder Polyorthoestern können bioabbaubare Drei-Formen-Polymere erzielt werden [Lendlein, A. & Langer, R.: Biodegradable, elastic shape-memory polymers for potential biomedical applications. Science, 2002. 296(5573): S. 1673-1676, Lendlein, A. & Kelch, S.: Degradable, Multifunctional Polymeric Biomaterials with Shape-memory. Materials Science Forum, 2005. 492-493: p. 219-224].

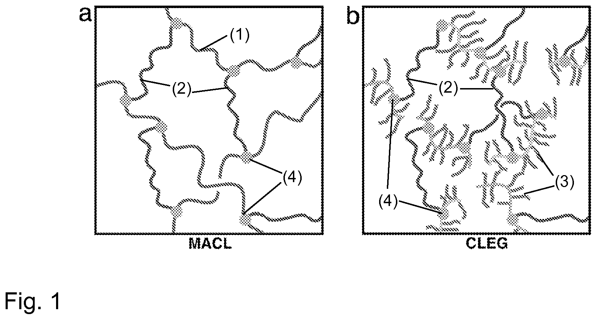

Polymernetzwerke, die den Drei-Formengedächtnis-Effekt ermöglich, können als AB-Netzwerke, in denen beide Kettensegmente zur Elastizität beitragen oder als Seitenkettennetzwerke, in denen die Segmente zwischen den Netzpunkten hauptsächlich zur Elastizität beitragen, ausgestaltet sein. Ersteres kann zum Beispiel durch die Polymerisation von Poly($\varepsilon$-caprolacton)dimethacrylat mit Cyclohexylmethacrylat realisiert werden (MACL). Ein Seitenkettennetzwerk kann durch die Polymerisation von Poly($\varepsilon$-caprolacton)dimethacrylat mit Polyethylenglycol Monomethylether Methacrylat realisiert werden (CLEG). In der Figur 1 sind beide bekannte Netzwerkarchitekturen grafisch veranschaulicht; (1) steht dabei für PCHMA-Segmente, (2) für PCL-Segmente, (3) für PEG-Seitenketten und (4) für Netzpunkte.

Für die Programmierung müssen Teilstücke des Probekörpers in eine temporäre Form gebracht werden. Für die Programmierung können beispielsweise folgende Verfahren angewendet werden:

- temporäre Temperatur-Erhöhung über die Schalttemperatur(en) $T_{switch}$ mit anschließender Deformation

- temporäres Einbringen von Weichmachern, so dass die Umgebungstemperatur über $T_{switch}$ liegt, mit anschließender Deformation und Entfernen des Weichmachers

Die Programmierung verschiedener Teilstücke des Bauteils muss dabei für jedes Teilstück des Bauteils separat erfolgen, wobei darauf zu achten ist, dass die Programmierung eines Teilstückes die Programmierung eines anderen Teilstückes nicht aufhebt. Die Programmierung erfolgt in Abhängigkeit von der Schalttemperatur. In der Praxis heißt das, dass das Teilstück mit der höchsten $T_{switch}$ zuerst programmiert wird und danach die Temperatur sequentiell abgesenkt wird und nachfolgend die weiteren Teilstücke programmiert werden. Darüber hinaus können auch verschiedene Programmierungsmethoden für einzelne Teilstücke verwendet werden.

Zum Abrufen der beiden Formänderungen des Bauteils ist es erforderlich, das Bauteil in das Wärme übertragende Medium zu bringen und dann die Medientemperatur sukzessive zu erhöhen, bis die erste Formänderung erfolgt. Erst bei weiterer Erhöhung der Medientemperatur erfolgt die weitere Formänderung des Bauteils.

Das Prinzip der Drei-Formengedächtnis-Polymere (oder auch Triple-Shape-Polymere) wurde bereits detailliert beschrieben. Bekannte Segmente basieren dabei zum einen auf der Kombination von Segmenten aus Polyethylenglycol (PEG) und Poly($\varepsilon$-caprolacton) (PCL) zum anderen auf der Kombination PCL und Cyclohexylmethacrylat (CHMA). Die Schalttemperaturen zur Ausnutzung des Drei-Formengedächtnis-Effektes liegen im ersten Fall bei 40 und 70 °C und im zweiten Fall bei 70 und 130 °C. Die Stimulierung der Formänderung von Bauteilen aus den beschriebenen Materialklassen kann in beiden Fällen nur über die Wärmeleitung der Luft erfolgen und dauert damit sehr lange (40 bis 80 Minuten). Wasser ist ein sehr guter Wärmeüberträger steht jedoch für beide Polymersysteme nicht zur Verfügung, da es im Falle des PEG/PCL-Systems zur Quellung des Netzwerkes aufgrund der Hydrophilie des PEG kommt. Dabei können auch kristalline PEG-Bereiche quellen und die für den Drei-Formengedächtnis-Effekt erforderliche physikalische Vernetzung kann so aufgehoben werden. Im Falle des PCL/CHMA-Systems ist es nicht möglich, unter Normaldruck Wasser auf die notwendige Schalttemperatur von 130 °C zu temperieren. Zahlreiche Anwendungen z.B. im medizinischen Bereich erfordern jedoch komplexe Formänderungen, insbesondere solche, welche die sequentielle Abfolge der Formen A → B → C umfassen, zum Teil in sehr kurzen Zeitintervallen. So kann es zum Beispiel erforderlich sein, dass sich ein "rundes" Röhrchen in ein "ovales" Röhrchen und wieder zurück in ein "rundes" Röhrchen verformen soll. Diese Verformung kann in einer wässrigen Umgebung bisher durch keine der bereits beschriebenen Drei-Formengedächtnis-Polymere geleistet werden. Die bisher erreichbaren Formänderungen sind durch die programmierbaren Formen begrenzt, eine Bewegung des Probekörpers ist bisher nur in dem Ausmaß möglich, wie diese Formänderung vorher programmiert wurde. Dabei sind insbesondere zwei- oder dreidimensionale Bewegungen stark limitiert. Ein weiterer Nachteil der bekannten Systeme ist ihre geringe Elastizität insbesondere unterhalb der Schalttemperatur.

Die bekannten Systeme weisen somit folgende Nachteile auf:

- Die bisherige Ausnutzung des Einweg-Formgedächtniseffektes gestattet nur die einmalige Änderung einer Form durch thermische Stimulierung. Die Änderung der Stimulierungsbedingungen, wie z.B. eine weitere Erhöhung der Temperatur, hat keinen Einfluss mehr auf die Form eines Bauteils, sofern man $T_{perm}$ nicht überschreitet, welches bei Thermoplasten ein Aufschmelzen des Bauteils zur Folge hätte.
- Durch die Einführung der Drei-Formengedächtnis-Polymere wird die Möglichkeit eröffnet, insgesamt drei verschiedene Formen eines Bauteils zu realisieren. Die sukzessive Stimulierung der einzelnen Formen wird über eine Temperaturerhöhung erreicht, nachdem das Bauteil entsprechend programmiert wurde. Die Programmierung bekannter Drei-Formengedächtnis-Polymere ist jedoch sehr aufwendig.
- Das Material sollte hohe Elastizitäten gewährleisten, d.h. hohe Bruchdehnungen besitzen, insbesondere größer 400 % bei Raumtemperatur. Bekannte Drei-Formengedächtnis-Polymere weisen jedoch deutlich niedrigere Elastizitäten auf.
- Bekannte Drei-Formengedächtnis-Polymere sind wasserempfindlich, so das Wasser als besonders effektiver Wärmeüberträger ausscheidet. Die Quellungseigenschaften und Schalttemperaturen erlauben keine Formänderung in Wasser.

Die genannten Probleme sind bisher noch nicht gelöst, auch wenn durch das kürzlich eingeführte Prinzip der Drei-Formengedächtnis-Polymere die Möglichkeit der sequentiellen Steuerung des thermisch induzierten Formgedächtniseffektes eröffnet wurde. Weder eine Einschritt-Programmierung des Drei-Formengedächtnis-Effektes bei Raumtemperatur, noch eine hohe Bruchdehnung > 400 %, noch eine Variation der Auslösetemperatur durch die Wahl der Programmierungstemperatur wurden bei Drei-Formengedächtnis-Materialien bisher realisiert. Weiterhin war es bisher nicht möglich, den Drei-Formengedächtniseffekt reversibel zu gestalten, nach jeder Formrückstellung war bisher eine Neuprogrammierung erforderlich.

Der Erfindung liegt die Aufgabe zugrunde, eines oder mehrere der genannten Probleme zu lösen oder zumindest zu mindern.

## Zusammenfassung der Erfindung

Ein erster Aspekt der Erfindung liegt in der Bereitstellung eines Polymernetzwerks mit Drei-Formengedächtnis-Effekt. Das Polymernetzwerk enthält

A) ein erstes kristallines Schaltsegment aus einem Sternpolymer; und

B) ein zweites kristallines Schaltsegment aus einem linearen Polymer oder einem Sternpolymer.

Sternpolymere sind vorliegend definiert als Polymere mit mindestens drei linearen Seitenarmen, verknüpft mit einem zentralen Kern. Mit anderen Worten, der Begriff Sternpolymer bezieht sich auf Polymere mit einer Hauptkette und mindestens einer Langkettenverzweigung oder Polymere mit mehreren Langkettenverzweigungen, die an einem gemeinsamen Verzweigungspunkt an der Hauptkette ansetzen. Vorzugsweise handelt es sich um Polymere mit insgesamt drei oder vier Seitenarmen.

Die beiden kristallinen Schaltsegmente sind im Polymernetzwerk kovalent miteinander verbunden. Die erfindungsgemäßen Drei-Formengedächtnis-Materialien sind demnach aus mindestens zwei unterschiedlichen Makromonomeren zusammengesetzt. Hierbei muss mindestens ein Makromonomer ein sternförmiges Telechel sein, das mindestens drei Seitenarme mit je einer endständigen reaktiven Gruppe aufweist. Das zweite Makromonomer muss linear mit mindestens zwei endständigen reaktiven Gruppen sein, oder bei beiden Makromonomeren handelt es sich um sternförmige Telechel. Zudem müssen beide Phasen kristallin sein. Das Drei-Formengedächtnis-Material kann ein Mehrphasensystem sein, in dem mindestens zwei Phasen kristallin sind.

Das erste kristalline Schaltsegment besteht aus einem Sternpolymer auf Basis von Poly(pentadecalacton) (PPDL-Segment). Das zweite kristalline Schaltsegment besteht aus einem linearen Polymer oder einem Sternpolymer auf Basis von Poly($\varepsilon$-caprolacton) (PCL-Segment) oder Polytetrahydrofuran (PTHF-Segment).

Ferner sind - insbesondere in Kombination mit den vorgenannten gesonderten Ausführungsformen - Polymernetzwerke bevorzugt, bei denen die Schmelzpunkte der beiden kristallinen Schaltsegmente im Bereich von 0 °C bis 100 °C, insbesondere im Bereich von Raumtemperatur bis 100 °C liegen. Weiterhin ist bevorzugt, wenn die Schmelzpunkte der beiden kristallinen Schaltsegmente mindestens 15 °C, insbesondere mindestens 20 °C auseinander liegen.

Nach einer weiteren bevorzugten Ausführungsform weist das erste kristalline Schaltsegment und/oder das zweite kristalline Schaltsegment des Polymernetzwerks ein mittleres Molekulargewicht im Bereich von 500 bis 50.000 g/mol, insbesondere im Bereich von 1.000 bis 5.000 g/mol auf. Insbesondere weisen in Polymernetzen mit PPDL-, PCL- oder PTHF-Segmenten, diese Segmente ein Molekulargewicht im genannten Bereich auf.

Bevorzugt ist ferner, wenn ein Anteil einzelnen Schaltsegmente, insbesondere der PPDL-Segmente, am Gesamtgewicht aller kristallinen Schaltsegmente 20 bis 80 Gew.-% beträgt. Insbesondere beträgt der Anteil der PPDL-Segmente am Gesamtgewicht eines Polymernetzwerks mit PPDL-Segmenten und PCL-Segmenten 20 bis 80 Gew.-%.

Die Herstellung des Drei-Formengedächtnis-Materials kann zum Beispiel derart erfolgen, dass als ein erstes Zwischenprodukt ein Sternpolymer auf Basis von Poly(pentadecalacton) mit endständig (terminalen) an den Seitenarmen angeordneten Funktionalitäten synthetisiert wird (diese Vorstufe kann auch als nichtlineares Telechel mit drei oder mehr Armen bezeichnet werden). Ein bedeutendes erstes Zwischenprodukt der Synthese des Drei-Formengedächtnis-Materials stellt demnach insbesondere ein Sternpolymer auf Basis von Poly(pentadecalacton) mit jeweils einer terminalen Funktionalität an jedem Seitenarm dar. Dieses Sternpolymer auf Basis von Poly(pentadecalacton) weist vorzugsweise ein mittleres Molekulargewicht im Bereich von 500 bis 50.000 g/mol, insbesondere im Bereich von 1.000 bis 5.000 g/mol auf. Für die Synthese der Sternpolymere stehen drei grundsätzliche Methoden zur Verfügung: (i) die Verknüpfung vorgefertigter Arme mit einem Kern, (ii) die Polymerisation von einem multifunktionellen Initiator aus und (iii) die Kombination beider Methoden.

Ein zweites Zwischenprodukt wird ein lineares Polymer oder einem Sternpolymer zum Beispiel auf Basis von Poly($\varepsilon$-caprolacton) oder Polytetrahydrofuran mit ebenfalls endständig an den Seitenarmen angeordneten Funktionalitäten verwendet. Dieses zweite polymere Zwischenprodukt weist vorzugsweise ein mittleres Molekulargewicht im Bereich von 500 bis 50.000 g/mol, insbesondere im Bereich von 1.000 bis 25.000 g/mol auf.

Die beiden polymeren Zwischenprodukte werden kovalent über ihre terminalen Funktionalitäten verknüpft. Die Verknüpfung kann direkt oder unter Zuhilfenahme geeigneter Kopplungsreagenzien (zum Beispiel Diisocyanaten) erfolgen. Die Verknüpfung kann insbesondere durch eine Polyadditionsreaktion oder über eine Photopolymerisation erfolgen. Vorzugsweise ist die Funktionalität eine Hydroxy-, Acrylat- oder Methacrylatgruppe.

Die Erfindung gewährt unter anderem die folgenden Vorteile:

a. PPDL-basierte Netzwerke haben eine Drei-Formengedächtnis-Funktionalität, die bei Raumtemperatur durch kaltes Verstrecken programmiert werden kann.

b. Durch die Verwendung von Wasser als Wärmeüberträger eröffnet sich für Drei-Formengedächtnis-Polymere die Möglichkeit, die zur Formänderung notwendigen Temperaturen wesentlich schneller zu erreichen als bei der Verwendung von Luft als Wärmeüberträger.

c. Durch die Auswahl eines zweiten Schaltsegmentes, dessen Übergangstemperatur unter der Siedetemperatur von Wasser liegt und welches darüber hinaus in Wasser nicht löslich ist, wird die Möglichkeit der Wärmeübertragung mittels Wasser geschaffen.

d. Die permanente Form wird bei den erfindungsgemäßen Polymernetzwerken bereits während der Polymerisation gebildet. Die Netzwerkbildung kann dabei insbesondere sowohl durch Polymerisation von Methacrylgruppen als auch durch Polykondensation von Hydroxylgruppen mit Diisocyanaten erfolgen. Die Polymerisation kann sowohl durch thermische Initiierung als auch photochemisch erfolgen. Insbesondere die photochemische Polymerisation ermöglicht komplexe Formkörper, da sie nicht aus Lösung erfolgt.

e. PPDL basierte Netzwerke weisen im Gegensatz zu den bisher beschriebenen Drei-Formengedächtnis-Netzwerken eine wesentlich höhere Elastizität auf und sind darüber hinaus in Wasser nicht löslich / quellbar.

f. Dehnungsfixierungsverhältnisse und Dehnungsrückstellungsverhältnisse weisen Werte über 90 % auf.

g. Schichten der Polymernetzwerke können unterschiedlich eindimensional programmiert werden und sind in der Lage, nach kovalentem Verkleben als Multilayer-System eine Fülle von dreidimensionalen Bewegungen zu realisieren.

h. Die Netzwerke zeigen unter konstanter Spannung einen thermisch induzierten reversiblen Drei-Formengedächtnis-Effekt. Dabei können hohe Dehnungen von 100 % und mehr erreicht werden. Dieser Drei-Formengedächtnis-Effekt kann ohne erneute Programmierung reproduziert werden, solange die Probe unter Spannung steht.

Durch die Verwendung von sternförmigen PPDL-Oligomeren wird eine Netzwerkarchitektur aufgebaut, die in ihren mechanischen Eigenschaften den bisherigen Systemen hinsichtlich Elastizität, kalter Verstreckbarkeit und der Wahl der Auslösetemperatur durch Wahl der Schalttemperatur weit überlegen ist. Die Verwendung von PPDL erfolgte bei bisherigen Formengedächtnis-Netzwerken immer als Hartsegment. Dies ist die erste Verwendung von PPDL-Segmenten als Schaltsegment. Weiterhin ist es die erste Drei-Formengedächtnis-Netzwerkarchitektur, in der zwei kristalline Hauptkettensegmente verwendet werden, die zur Gesamtelastizität des Netzwerks beitragen. Der Aufbau von Mehrschicht-Systemen bringt eine umfangreiche Erweiterung der möglichen Formänderungen mit sich, wodurch das Anwendungsspektrum der Polymere beträchtlich erweitert wird.

Es wird möglich, Bauteile, die aus einem einheitlichen Drei-Formengedächtnis-Polymeren hergestellt wurden, durch Erhöhung der Umgebungstemperatur im wässrigen Milieu gezielt zeitversetzt zu schalten. Bei der Einschritt-Programmierung von Drei-Formen-Netzwerken mit einem kristallinem und einem glasigen Segment wurde zudem eine Rückstellung der Programmierung nach einiger Zeit beobachtet. Drei-Formengedächtnis-Netzwerke mit zwei kristallinen Segmenten, bei denen beide kristallinen Phasen zur Gesamt-Elastizität beitragen, weisen diese ungewollte Rückstellung nicht auf.

Die Verwendung von Drei-Formengedächtnis-Polymeren mit mehreren Schaltsegmenten ermöglicht zwei aufeinander folgende Formübergänge in einem Polymer zu realisieren.

Weitere Aspekte der Erfindung sind:

A) Neue Ansätze zur Netzwerksynthese

    1. Die Netzwerke werden aus zwei verschiedenen sternförmigen Telechelen aufgebaut oder
    2. Der Aufbau der Netzwerk erfolgt aus einem sternförmigen Telechel und einem linearen Telechel

B) PPDL-Segmente werden für die Netzwerke verwendet

    1. PPDL ist nicht löslich in Wasser
    2. PPDL weist eine Schmelztemperatur unter 100 °C auf.

C) PPDL basierte Formgedächtnis-Systeme weisen eine hohe Elastizität auf

    1. PPDL basierte Formgedächtnis-Systeme ermöglichen die Programmierung durch kaltes Verstrecken
    2. PPDL basierte Formgedächtnis-Systeme ermöglichen eine ausgeprägte Dehnungszunahme bei Kristallisation unter Spannung

D) PCL und PPDL Segmente werden kovalent vernetzt.

    1. Die Netzwerkarchitektur ermöglicht die Einführung eines Temperatur- Formgedächtnis-Effektes über einen weiten Temperaturbereich (Raumtemperatur bis $T_{m,PPDL}$)

Das Polymernetzwerk auf Basis von sternförmigen Segmenten aus Poly(pentadecadolacton) (PPDL) kann mehrere Formänderungsschritte durchführen. Diese zeichnen sich durch folgende Aspekte aus

    (1) hohe Elastizität bei Raumtemperatur (RT)
    (2) der Drei-Formengedächtnis-Effekt kann bei Umgebungstemperatur ($T < T_{m,PCL}$) durch kaltes Verstrecken programmiert werden
    (3) die Programmierung kann als Einschritt-Programmierung erfolgen

Es sind Zusammensetzungen möglich, die einen Temperatur-Formgedächtnis-Effekt für eine der beiden Schaltphasen ermöglichen. Durch eine mehrschichtige Architektur von Probekörpern sind komplexe dreidimensionale Formänderungen möglich. Ferner sind Zusammensetzungen möglich, die nach Vorverstreckung unter konstanter Spannung einen reversiblen Drei-Formengedächtnis-Effekt zeigen.

Ein weiterer Aspekt der Erfindung liegt in der Bereitstellung eines Verfahrens zur Programmierung eines Polymernetzwerks mit Drei-Formengedächtnis-Effekt, das ein erstes kristallines Schaltsegment aus einem Sternpolymer und ein zweites kristallines Schaltsegment aus einem linearen Polymer oder einem Sternpolymer enthält. Das Programmierverfahren umfasst den Schritt:

Programmierung von mindestens zwei unterschiedlichen Formen des Polymernetzwerks durch

    b) eine Einschritt-Methode;
    c) kaltes Verstrecken; oder
    d) eine Kombination von Erwärmen und kaltem Verstrecken.

Die Programmierung kann ferner nach der Ein-Schritt Methode erfolgt, wobei das Polymernetzwerk auf $T_{high}$

oberhalb der beiden Schmelztemperaturen $T_{m,1}$ und $T_{m,2}$ der kristallinen Schaltsegmente aufgeheizt ($T_{m,1} < T_{m,2}$), deformiert und dann auf eine Temperatur unterhalb $T_{m,1}$ abgekühlt wird. Die Rückstellung erfolgt beim Aufheizen auf $T_{high}$. Es erfolgt zunächst eine Rückstellung bei $T_{sw,1}$ und bei weiterem Aufheizen bei $T_{sw,2}$.

Die Programmierung kann weiterhin durch kaltes Verstrecken erfolgt, wobei das Polymernetzwerk bei einer Temperatur $T_{low}$ unterhalb der beiden Schmelztemperaturen $T_{m,1}$ und $T_{m,2}$ der kristallinen Schaltsegmente ($T_{low} << T_{m,1} < T_{m,2}$) deformiert wird. Die Rückstellung erfolgt beim Aufheizen auf $T_{high}$. Es erfolgt zunächst eine Rückstellung bei $T_{sw,1}$ und bei weiterem Aufheizen bei $T_{sw,2}$.

Die Programmierung kann jedoch auch durch eine Kombination von Erwärmen und kaltem Verstrecken erfolgt, wobei das Polymernetzwerk bei einer Temperatur $T_{mid}$, die zwischen den beiden Schmelztemperaturen $T_{m,1}$ und $T_{m,2}$ der kristallinen Schaltsegmente liegt ($T_{m,1} < T_{mid} < T_{m,2}$), deformiert wird. Die Rückstellung erfolgt beim Aufheizen auf $T_{high}$. Es erfolgt zunächst eine Rückstellung bei $T_{sw,1}$ und bei weiterem Aufheizen bei $T_{sw,2}$.

Das Ausmaß der Verstreckung bestimmt dabei die Verformung während des Abkühlens. Die Rückstellung erfolgt beim Aufheizen auf $T_{high}$ unter konstant gehaltener Spannung. Es erfolgt zunächst eine Rückstellung bei $T_{sw,1}$ und bei weiterem Aufheizen bei $T_{sw,2}$. Das Schalten zwischen den der Formen durch Abkühlen und Aufheizen kann bei konstanter Spannung beliebig wiederholt werden, ohne dass ein weiterer Programmierungsschritt notwendig ist.

Die Rückstellung kann unter Spannung oder durch spannungsloses Aufheizen über beide $T_{sw}$ hinweg erfolgen. Sie kann insbesondere in Wasser durchgeführt werden. Ein weiterer Aspekt der Erfindung betrifft daher ein Verfahren zur Rückstellung eines programmierten Polymernetzwerks mit Drei-Formengedächtnis-Effekt, das den Schritt einer thermischen Behandlung des programmierten Polymernetzwerks in Wasser als Wärmeträger umfasst.

Durch die Wahl der Programmierungstemperatur kann für einen Formgedächtnisübergang im Schmelzbereich der beiden kristallinen Phasen die Schalttemperatur derselbigen festgelegt werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:

Figur 1      bekannte Polymernetzwerkarchitekturen, nämlich (a) ein MACL Netzwerk und (b) ein CLEG Netzwerk;

Figur 2A      Netzwerkarchitektur eines erfindungsgemäßen Systems und seine Darstellung nach einer ersten Ausführung; und

Figur 2B      Netzwerkarchitektur eines erfindungsgemäßen Systems und seine Darstellung nach einer zweiten Ausführung.

Die Synthese der hydroxytelechelischen Sternpolymere mit PCL- bzw. PPDL-Seitenarmen erfolgt durch Ringöffnungspolymerisation von ε-Caprolacton bzw. Pentadecadolacton mit tri- bzw. tetrafunktionellen Initiatoren. Die Synthese kann analog zu folgender Vorschrift erfolgen: Arvanitoyannis, I., et al.: Novel Star-Shaped Polylactide with Glycerol Using Stannous Octoate or Tetraphenyl Tin as Catalyst 1. Synthesis, Characterization and Study of Their Biodegradability, Polymer, 1995, 36(15), S. 2947 - 2956. Im Gegensatz zur Referenz wurde jedoch die Ringöffnungspolymerisation von PPDL in 14 bis 21 Tagen durchgeführt. In analoger Weise können auch hydroxytelechelische Sternpolymere mit PTHF-Seitenarmen synthetisiert werden.

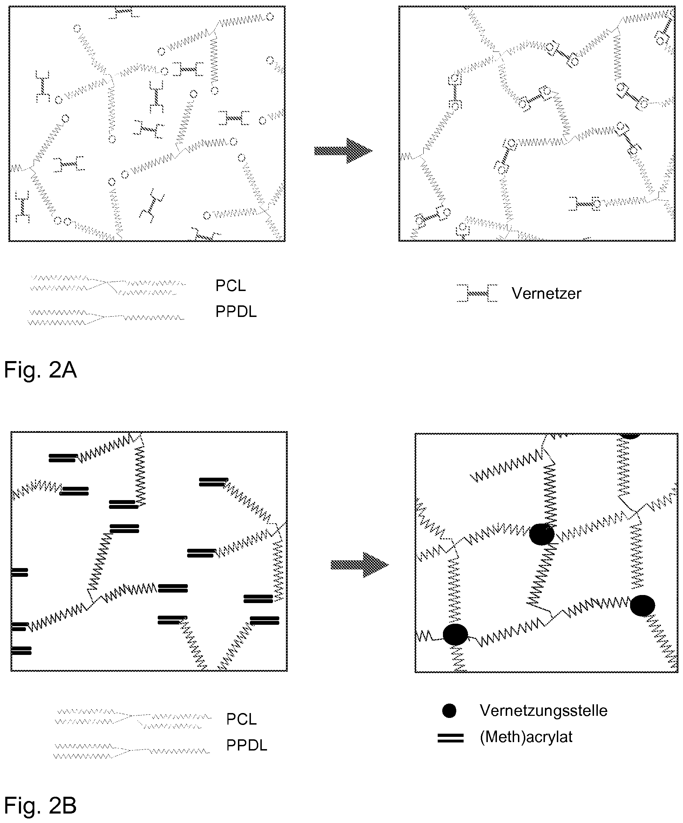

Beispiele, wie Polymernetzwerke aus sternförmigen Telechelen aufgebaut werden, sind in den Figuren 2A und 2B dargestellt.

### Synthese hydroxytelechelischer Oligo(ε-caprolactone) PCL(x)-OH

97 mL ε-caprolacton, 0,68 g Pentaerythrit und 280 mg Dibutylzinnoxid (DBTO) werden unter Rühren in einem Schlenkkolben in Stickstoffatmosphäre bei 130 °C zur Reaktion gebracht. Nach einer Polymerisationszeit von 7 h wird das Reaktionsgemisch auf Raumtemperatur abgekühlt. Die Oligomere werden in einem etwa sechsfachen Volumenüberschuss an Dichlormethan gelöst. Das Reaktionsprodukt wird durch langsames Eintropfen der Lösung in einen etwa zehnfachen Volumenüberschuss an Hexanfraktion unter starkem Rühren gefällt. Das Präzipitat wird mit Hexanfraktion gewaschen und bei 25 °C im Vakuum (ca. 1 mbar) bis zur Gewichtskonstanz getrocknet.

Die Molmasse und funktionellen Gruppen sowie thermischen Eigenschaften wurden mittels OH-Zahl-Bestimmung, GPC, $^1$H-NMR und DSC analysiert. Die OH-Zahl-Bestimmung ergab Mn = 22.700 g·mol$^{-1}$. DSC-Messungen ergaben eine Schmelztemperatur von 54,5 °C, $\Delta$H 76.8 J·g$^{-1}$. Das erhaltene Oligo(ε-caprolacton) mit $M_n$ von etwa 20.000 g/mol wird nachfolgend als PCL(20)-OH bezeichnet.

Die Synthese des hydroxytelechelischen Oligo(ε-caprolacton)s PCL(4)-OH mit $M_n$ 4000 g·mol$^{-1}$ oder des hydroxytelechelischen Oligo(ε-caprolacton)s PCL(8)-OH mit $M_n$ 8000 g·mol$^{-1}$ erfolgte durch Ringöffnungspolymerisation

von ε-Caprolacton analog zur PCL(20)-OH. PCL(8)-OH ist auch kommerziell erhältlich unter der Bezeichnung CAPA4801.

**Synthese hydroxytelechelischer Oligo(pentadecadolactone) PPDL(y)-OH**

112,5 g Pentadecadolacton, 3,375 g 1,1,1-Tris(hydroxymethyl)ethan (ggf. auch andere tri- oder tetrafunktionelle Initiatoren) und DBTO 105 mg werden unter Rühren in einem Schlenkkolben in Stickstoffatmosphäre bei 130 °C zur Reaktion gebracht. Nach einer Polymerisationszeit von 14 bis 21 Tagen wird das Reaktionsgemisch auf Raumtemperatur abgekühlt. Die Oligomere werden in einem etwa sechsfachen Volumenüberschuss an Dichlormethan gelöst. Das Reaktionsprodukt wird durch langsames Eintropfen der Lösung in einen etwa zehnfachen Volumenüberschuss an Hexanfraktion unter kräftigem Rühren gefällt. Das Präzipitat wird mit Hexanfraktion gewaschen und bei 50 °C im Vakuum (ca. 1 mbar) bis zur Gewichtskonstanz getrocknet.

Die Molmasse und funktionellen Gruppen sowie thermischen Eigenschaften wurden mittels OH-Zahl-Bestimmung, GPC, $^1$H-NMR und DSC analysiert. Die OH-Zahl-Bestimmung zeigt $M_n$ = 4000 g·mol$^{-1}$. Mittels DSC sind zwei Schmelztemperaturen bei 49,8°C und 84,8 °C, $\Delta H$ 109.5 J·g$^{-1}$ zu detektieren. Das erhaltene Oligo(pentadecadolacton) mit $M_n$ von etwa 4000 g/mol wird nachfolgend als PPDL(4)-OH bezeichnet.

Die Synthese des hydroxytelechelischen Oligo(pentadecadolacton)s PPDL(3)-OH mit $M_n$ 3000 g·mol$^{-1}$ oder des hydroxytelechelischen Oligo(pentadecadolacton)s PPDL(2)-OH mit $M_n$ 2000 g·mol$^{-1}$ erfolgte analog zur Synthese von PPDL(4)-OH.

**Synthese Oligo(ε-caprolacton)tetramethacrylate PCL(x)-IEMA**

50,0 g PCL(20)-OH, 1,6 mL IEMA und 6,5 μL Dibutylzinn(IV)dilaurat werden in 250 mL Dichlormethan unter Ar gelöst und bei Raumtemperatur 5 Tage gerührt. Das Reaktionsprodukt wird durch langsames Eintropfen der Lösung in einen etwa zehnfachen Volumenüberschuss an Hexanfraktion unter starkem Rühren gefällt. Das Präzipitat wird mit Hexanfraktion gewaschen und bei RT im Vakuum (ca. 1 mbar) bis zur Gewichtskonstanz getrocknet. Mittels $^1$H-NMR wurde gezeigt, dass sich die OH-Gruppen in PCL(20)-OH mit IEMA vollständig umgesetzt haben. Das erhaltene Oligo(ε-caprolacton)tetramethacrylat wird nachfolgend als PCL(20)-IEMA bezeichnet.

Die Synthese des Oligo(ε-caprolacton)tetramethacrylats PCL(4)-IEMA mit $M_n$ 4000 g·mol$^{-1}$ und des Oligo(ε-caprolacton)tetramethacrylats PCL(8)-IEMA mit $M_n$ 8000 g·mol$^{-1}$ erfolgte analog zur PCL(20)-IEMA.

**Synthese Oligo(pentadecadolacton)trimethacrylate PPDL(y)-IEMA**

50,0 g PPDL(4)-OH, 6,1 mL IEMA und 25,4 μL Dibutylzinn(IV)dilaurat werden in 250 mL Dichlormethan unter Ar gelöst und bei Raumtemperatur 5 Tage gerührt. Das Reaktionsprodukt wird durch langsames Eintropfen der Lösung in einen etwa zehnfachen Volumenüberschuss an Hexanfraktion unter starkem Rühren gefällt. Das Präzipitat wird mit Hexanfraktion gewaschen und bei RT im Vakuum (ca. 1 mbar) bis zur Gewichtskonstanz getrocknet. Mittels $^1$H-NMR wurde gezeigt, dass sich die OH Gruppen in PPDL(4)-OH mit IEMA vollständig umgesetzt haben. Das erhaltene Oligo(pentadecadolacton)trimeth-acrylat wird nachfolgend als PPDL(4)-IEMA bezeichnet.

**Synthese der Netzwerke gemäß Polykondensationsmethode A)**

Die hergestellten Sternpolymere PCL(x)-OH und PPDL(y)-OH werden in einem geeigneten Mischungsverhältnis in Dichlormethan gelöst und es wird 2,2,4- und 2,4,4-Trimethyl-hexan-1,6-diisocyanat (TMDI) als Vernetzer zugesetzt. Als geeignete Mischungsverhältnisse für Drei-Formengedächtnis-Polymere haben sich Mischungen mit 25 - 75 Gew.-% PPDL(y)-OH erwiesen.

Die hydroxytelechelischen Oligomere werden in einem etwa zehnfachen Massenüberschuss an trockenem Dichlormethan unter Stickstoff gelöst. Zu dieser Lösung wird unter Rühren das Diisocyanat gegeben. Die Menge an Diisocyanat entspricht dabei einem molaren Verhältnis der Isocyanat- zu Hydroxygruppen von 1,05 zu 1,00. Die Berechnung in Tab. 1 basiert auf dem durch $^1$H-NMR-Spektroskopie ermittelten Zahlenmittel der Molmasse der Hydroxyfunktionalität der polymeren Edukte, zum Beispiel von PPDL(4)-OH bzw. PCL(20)-OH. Das Reaktionsgemisch wird 5 Minuten bei Raumtemperatur gerührt und in PTFE-Schalen gegeben. Bei Verwendung von Schalen mit einem Innendurchmesser von ca. 100 mm werden etwa 20 mL der Lösung eingesetzt. Über die Lösungen wird für 24 h bei 60 °C ein kontinuierlicher Stickstoffstrom geleitet, um das Lösungsmittel während der Filmbildung vorsichtig zu verdampfen. Anschließend werden die Filme unter Vakuum (ca. 100 mbar) 4 d auf 80 °C erwärmt. Die Rohprodukte der Polyadditionsreaktion werden, soweit nicht anders angegeben, in Chloroform gequollen, wobei der Gelgehalt und der Quellungsgrad bestimmt werden, und bei 80 °C im Vakuum (1 mbar) bis zur Gewichtskonstanz getrocknet. Die Einwaagen der Oligomere und des Diisocyanats und Gelgehalt der Netzwerke sind in Tab. 1 aufgeführt.

Tab. 1 Ansätze zur Darstellung der Netzwerke aus PCL(4)-OH, PCL(8)-OH, PCL(20)-OH, PPDL(2)-OH, PPDL(3)-OH, PPDL(4)-OH und TMDI gemäß Polykondensationsmethode A) (indiziert durch das Präfix T); Netzwerkbezeichnung: PPDL(x)-PCL(y,z) sind Polymernetzwerke aus folgenden sternförmigen Prepolymeren: 3-Arm PPDL mit $M_n$ ca. x·1000 g/mol und 4-Arm PCL mit $M_n$ ca. y·1000 g/mol und einem Anteil von z Masse-%;

| Bezeichnung | PPDL(y)-OH | PCL(20)-OH | PCL(8)-OH | PCL(4)-OH | TMDI | $\mu_{PPPDL}$ | Gelgehalt | Quellungsgrad in Chloroform |
|---|---|---|---|---|---|---|---|---|
| | (g) | (g) | (g) | (g) | (ml) | (Gew.-%) | (Gew.-%) | (Gew.-%) |
| T-PPDL(4) | 1.50 | - | - | - | 0.070 | 100 | 91 | 1420 |
| T-PPDL(4)-PCL(20,75) | 0.75 | 2.25 | - | - | 0.106 | 25 | 85 | 2220 |
| T-PPDL(4)-PCL(20,60) | 1.2 | 1.8 | - | - | 0.113 | 40 | 85 | 1980 |
| T-PPDL(4)-PCL(20,50) | 1.5 | 1.5 | - | - | 0.118 | 50 | 88 | 1750 |
| T-PPDL(4)-PCL(20,40) | 1.8 | 1.2 | - | - | 0.122 | 60 | 85 | 1960 |
| T-PPDL(4)-PCL(20,25) | 2.25 | 0.75 | - | - | 0.141 | 75 | 92 | 1440 |
| T-PPDL(4)-PCL(8,75) | 0.75 | - | 2.25 | - | 0.148 | 25 | 98 | 830 |
| T-PPDL(4)-PCL(8,60) | 1.2 | - | 1.8 | - | 0.146 | 40 | 97 | 970 |
| T-PPDL(4)-PCL(8,50) | 1.5 | - | 1.5 | - | 0.145 | 50 | 95 | 1240 |
| T-PPDL(4)-PCL(8,40) | 1.8 | - | 1.2 | - | 0.144 | 60 | 92 | 1820 |
| T-PPDL(4)-PCL(8,25) | 2.25 | - | 0.75 | - | 0.143 | 75 | 92 | 1310 |
| T-PPDL(4)-PCL(4,75) | 0.75 | - | - | 2.25 | 0.26 | 25 | 97 | 1100 |
| T-PPDL(4)-PCL(4,60) | 1.2 | - | - | 1.8 | 0.236 | 40 | 93 | 1350 |
| T-PPDL(4)-PCL(4,50) | 1.5 | - | - | 1.5 | 0.22 | 50 | 94 | 1360 |
| T-PPDL(4)-PCL(4,40) | 1.8 | - | - | 1.2 | 0.204 | 60 | 92 | 1280 |
| T-PPDL(4)-PCL(4,25) | 2.25 | - | - | 0.75 | 0.18 | 75 | 94 | 1220 |
| T-PPDL(3)-PCL(20,75) | 0.75 | 2.25 | - | - | 0.106 | 25 | 85 | 2080 |
| T-PPDL(3)-PCL(20,50) | 1.5 | 1.5 | - | - | 0.186 | 50 | 84 | 1940 |
| T-PPDL(3)-PCL(20,25) | 2.25 | 0.75 | - | - | 0.250 | 75 | 90 | 1250 |
| T-PPDL(3)-PCL(8,75) | 0.75 | - | 2.25 | - | 0.200 | 25 | 98 | 800 |
| T-PPDL(3)-PCL(8,50) | 1.5 | - | 1.5 | - | 0.238 | 50 | 97 | 790 |
| T-PPDL(3)-PCL(8,25) | 2.25 | - | 0.75 | - | 0.275 | 75 | 98 | 800 |

EP 2 342 066 B1

(fortgesetzt)

| Bezeichnung | PPDL(y)-OH | PCL(20)-OH | PCL(8)-OH | PCL(4)-OH | TMDI | $\mu_{PPPDL}$ | Gelgehalt | Quellungsgrad in Chloroform |
|---|---|---|---|---|---|---|---|---|
| | (g) | (g) | (g) | (g) | (ml) | (Gew.-%) | (Gew.-%) | (Gew.-%) |
| T-PPDL(3)-PCL(4,75) | 0.75 | - | - | 2.25 | 0.302 | 25 | 95 | 1050 |
| T-PPDL(3)-PCL(4,50) | 1.5 | - | - | 1.5 | 0.306 | 50 | 96 | 880 |
| T-PPDL(3)-PCL(4,25) | 2.25 | - | - | 0.75 | 0.309 | 75 | 97 | 830 |
| T-PPDL(2)-PCL(20,75) | 0.75 | 2.25 | - | - | 0.138 | 25 | 90 | 1620 |
| T-PPDL(2)-PCL(20,50) | 1.5 | 1.5 | - | - | 0.215 | 50 | 88 | 1710 |
| T-PPDL(2)-PCL(20,25) | 2.25 | 0.75 | - | - | 0.293 | 75 | 95 | 1170 |
| T-PPDL(2)-PCL(8,75) | 0.75 | - | 2.25 | - | 0.214 | 25 | 98 | 800 |
| T-PPDL(2)-PCL(8,50) | 1.5 | - | 1.5 | - | 0.66 | 50 | 98 | 820 |
| T-PPDL(2)-PCL(8,25) | 2.25 | - | 0.75 | - | 0.318 | 75 | 97 | 920 |
| T-PPDL(2)-PCL(4,75) | 0.75 | - | - | 2.25 | 0.317 | 25 | 96 | 1040 |
| T-PPDL(2)-PCL(4,50) | 1.5 | - | - | 1.5 | 0.334 | 50 | 96 | 1030 |
| T-PPDL(2)-PCL(4,25) | 2.25 | - | - | 0.75 | 0.352 | 75 | 93 | 1100 |

**Synthese der Netzwerke gemäß Polymerisationsmethode B)**

Die hergestellten hydroxytelechelischen Sternpolymere PCL(x)-IEMA bzw. PPDL(y)-IEMA werden aufgeschmolzen, vermischt und mit einem thermischen Radikalinitiator (AIBN, BPO) versetzt. Auch hier haben sich für Drei-Formgedächtnis-Polymere Mischungen mit 25 - 75 Gew.-% PPDL als brauchbar erwiesen. Die Polymerisation kann alternativ auch photochemisch erfolgen. Dazu werden die funktionalisierten Oligomere aufgeschmolzen, mit einem 1 mol-% Photoinitiator versetzt, vermischt und durch Bestrahlen mit einer Hg-Lampe photopolymerisiert.

Tab. 2 Ansätze zur Darstellung der Netzwerke aus PCL(20)-IEMA, und PPDL(4)-IEMA gemäß Polymerisationsmethode B) (indiziert durch das Präfix P).

| Bezeichnung | PPDL(4 )-IEMA (g) | PCL(8)-IEMA (g) | PCL(20) -IEMA (g) | $\mu_{PPPDL}$ (Gew.-%) | Gelgehalt (Gew.-%) | Quellungsgrad in Chloroform (Gew.-%) |
|---|---|---|---|---|---|---|
| P-PPDL(4)-PCL(20, 75) | 0.75 | - | 2.25 | 25 | 87 | 840 |
| P-PPDL(4)-PCL(20, 60) | 1.20 | - | 1.80 | 40 | 58 | 1660 |
| P-PPDL(4)-PCL(20, 50) | 1.50 | - | 1.50 | 50 | 71 | 1050 |
| P-PPDL(4)-PCL(20, 40) | 1.80 | - | 1.20 | 60 | 54 | 1420 |
| P-PPDL(4)-PCL(20, 25) | 2.25 | - | 0.75 | 75 | 78 | 1000 |
| P-PPDL(4)-PCL(20, 12) | 2.625 | - | 0.375 | 88 | 87 | 650 |
| P-PPDL(4)-PCL(8, 75) | 0.75 | 2.25 | - | 25 | 88 | 620 |
| P-PPDL(4)-PCL(8, 60) | 1.20 | 1.8 | - | 40 | 70 | 900 |
| P-PPDL(4)-PCL(8, 50) | 1.50 | 1.5 | - | 50 | 87 | 590 |
| P-PPDL(4)-PCL(8, 40) | 1.80 | 1.2 | - | 60 | 65 | 980 |
| P-PPDL(4)-PCL(8, 25) | 2.25 | 0.75 | - | 75 | 77 | 850 |

**Thermische Eigenschaften der Polymernetzwerke**

Die Netzwerke aus PPDL und PCL mit $M_n$ von 4000 g·mol$^{-1}$, 8000 g·mol$^{-1}$ und 20.000 g·mol$^{-1}$ weisen in DSC-Untersuchungen in einem Temperaturbereich von -100 °C bis 100 °C zwei Schmelzbereiche auf. Daher können sie als semikristalline Systeme betrachtet werden. Tab. 3 zeigt die thermischen Eigenschaften der Polymernetzwerke. Die zwei Schmelztemperaturen können als zwei $T_{trans}$ für den Triple-Shape-Effekt benutzt werden.

Tab. 3. Thermische Eigenschaften der Polymernetzwerke gemäß Polykondensationsmethode A)

| Bezeichnung | $\mu_{PPDL}$ [Gew.-%] | $T_g$ [°C] | $T_{m1}$ [°C] | $T_{m2}$ [°C] | $\Delta H_1$[b] [J·g$^{-1}$] | $\Delta H_{PCL}$[c] [J·g$^{-1}$] | $\Delta H_2$[b] [J·g$^{-1}$] | $\Delta H_{PPDL}$[c] [J·g$^{-1}$] |
|---|---|---|---|---|---|---|---|---|
| T-PPDL(4) | 100 | n.d. | -- | 79.4 | -- | -- | 99.4 | 99.4 |
| T-PPDL(4)-PCL(20,75) | 25 | n.d. | 55.1 | 74.8 | 56.0 | 74.7 | 20.5 | 82.0 |
| T-PPDL(4)-PCL(20,60) | 40 | n.d. | 54.3 | 76.9 | 40.6 | 67.7 | 30.7 | 76.8 |
| T-PPDL(4)-PCL(20,50) | 50 | n.d. | 52.6 | 77.1 | 29.4 | 58.8 | 40.2 | 80.4 |
| T-PPDL(4)-PCL(20,40) | 60 | n.d. | 53.5 | 79.1 | 32.8 | 82.0 | 53.3 | 88.8 |
| T-PPDL(4)-PCL(20,25) | 75 | n.d. | 52.0 | 78.6 | 18.8 | 75.2 | 64.0 | 85.3 |
| T-PPDL(4)-PCL(8,75) | 25 | -54.6 | 36.9 | 72.5 | 39.0 | 52.0 | 21.3 | 85.2 |
| T-PPDL(4)-PCL(8,60) | 40 | -55.2 | 38.6 | 74.2 | 33.9 | 56.5 | 29.9 | 74.8 |
| T-PPDL(4)-PCL(8,50) | 50 | n.d. | 39.9 | 77.5 | 30.4 | 60.8 | 44.0 | 88.0 |
| T-PPDL(4)-PCL(8,40) | 60 | n.d. | 42.3 | 79.1 | 25.4 | 63.5 | 51.9 | 86.5 |
| T-PPDL(4)-PCL(8,25) | 75 | n.d. | 42.8 | 79.5 | 17.6 | 70.4 | 71.1 | 94.8 |
| T-PPDL(4)-PCL(4,75) | 25 | -47.8 | 31.0 | 71.7 | 34.0 | 45.3 | 19.2 | 76.8 |
| T-PPDL(4)-PCL(4,60) | 40 | n.d. | 34.5 | 77.1 | 33.7 | 56.2 | 34.7 | 86.8 |
| T-PPDL(4)-PCL(4,50) | 50 | n.d. | 33.1 | 75.1 | 24.0 | 48.0 | 46.2 | 92.4 |
| T-PPDL(4)-PCL(4,40) | 60 | n.d. | 31.9 | 75.3 | 18.3 | 45.3 | 55.8 | 93.0 |
| T-PPDL(4)-PCL(4,25) | 75 | n.d. | n.d. | 78.7 | n.d. | n.d. | 66.4 | 88.5 |
| T-PPDL(3)-PCL(20,75) | 25 | -57.5 | 56.4 | 71.6 | 53.9 | 71.9 | 15.1 | 60.4 |
| T-PPDL(3)-PCL(20,50) | 50 | n.d. | 54.0 | 73.4 | 40.6 | 81.2 | 36.8 | 73.6 |
| T-PPDL(3)-PCL(20,25) | 75 | n.d. | 53.9 | 74.6 | 30.2 | 120.8 | 53.4 | 71.2 |
| T-PPDL(3)-PCL(8,75) | 25 | -53.0 | 36.2 | 65.5 | 38.8 | 51.1 | 14.0 | 56.0 |
| T-PPDL(3)-PCL(8,50) | 50 | n.d. | 32.7 | 61.6 | 28.6 | 57.2 | 39.4 | 78.8 |
| T-PPDL(3)-PCL(8,25) | 75 | n.d. | 32.8 | 73.4 | 14.6 | 58.4 | 59.9 | 79.9 |
| T-PPDL(3)-PCL(4,75) | 25 | -46.4 | 29.8 | 67.3 | 36.8 | 49.1 | 16.9 | 67.6 |
| T-PPDL(3)-PCL(4,50) | 50 | n.d. | 27.1 | 72.0 | 24.6 | 49.2 | 40.5 | 81.0 |
| T-PPDL(3)-PCL(4,25) | 75 | n.d. | n.d. | 68.7 | - | - | 70.6 | 70.6 |
| T-PPDL(2)-PCL(20,75) | 25 | n.d. | 55.0 | n.d. | 66.1 | 66.1 | - | - |
| T-PPDL(2)-PCL(20,50) | 50 | n.d. | 54.2 | 64.5 | 49.8 | 99.6 | 22.8 | 45.6 |
| T-PPDL(2)-PCL(20,25) | 75 | n.d. | n.d. | 61.6 | - | - | 67.4 | 67.4 |
| T-PPDL(2)-PCL(8,75) | 25 | -51.4 | 35.0 | 53.7 | 45.2 | 60.3 | 6.3 | 25.2 |
| T-PPDL(2)-PCL(8,50) | 50 | n.d. | 31.3 | 54.0 | 30.4 | 60.8 | 23.6 | 47.2 |
| T-PPDL(2)-PCL(8,25) | 75 | n.d. | n.d. | 58.4 | - | - | 63.0 | 63.0 |
| T-PPDL(2)-PCL(4,75) | 25 | -45.2 | 27.7 | 52.8 | 40.6 | 54.1 | 11.1 | 44.4 |

(fortgesetzt)

| Bezeichnung | $\mu_{PPDL}$ [Gew.-%] | $T_g$ [°C] | $T_{m1}$ [°C] | $T_{m2}$ [°C] | $\Delta H_1$[b) [J·g$^{-1}$] | $\Delta H_{PCL}$[c) [J·g$^{-1}$] | $\Delta H_2$[b) [J·g$^{-1}$] | $\Delta H_{PPDL}$ [c) [J·g$^{-1}$] |
|---|---|---|---|---|---|---|---|---|
| T-PPDL(2)-PCL(4,50) | 50 | n.d. | 28.3 | 57.7 | 18.7 | 37.4 | 27.7 | 55.4 |
| T-PPDL(2)-PCL(4,25) | 75 | n.d. | n.d. | 63.5 | - | - | 65.7 | 65.7 |

Tab. 4. Thermische Eigenschaften der Polymernetzwerke gemäß Polymerisationsmethode B)

| Bezeichnung | $\mu_{PPPDL}$ Gew.-% | Tm1 °C | Tm2 °C | $\Delta H_1$ J/g | $\Delta H_2$ J/g |
|---|---|---|---|---|---|
| P-PPDL(4)-PCL(20, 75) | 25 | 47.0 | 68.6 | 50.7 | 15.0 |
| P-PPDL(4)-PCL(20, 60) | 40 | 54.1 | 67.9/83.5 | 46.5 | 27.6 |
| P-PPDL(4)-PCL(20, 50) | 50 | 53.7 | 70.0/83.8 | 32.6 | 46.1 |
| P-PPDL(4)-PCL(20, 40) | 60 | 54.1 | 74.1/84.3 | 20.3 | 63.0 |
| P-PPDL(4)-PCL(20, 25) | 75 | 52.9 | 81.7 | 22.7 | 47.1 |
| P-PPDL(4)-PCL(20, 12) | 88 | 51.8 | 87.7 | 19.5 | 53.8 |
| P-PPDL(4)-PCL(8, 75) | 25 | 43.3 | 67.9 | 14.3 | 30.6 |
| P-PPDL(4)-PCL(8, 60) | 40 | 47.2 | 71.7/81.5 | 24.8 | 51.9 |
| P-PPDL(4)-PCL(8, 50) | 50 | 20.9 | 67.9 | 16.7 | 38.0 |
| P-PPDL(4)-PCL(8, 40) | 60 | 46.5 | 70.4 | - | 66.9 |
| P-PPDL(4)-PCL(8, 25) | 75 | 46.4 | 73.0/82.2 | 16.1 | 74.8 |

**Mechanische Eigenschaften der Polymernetzwerke**

Die mechanischen Eigenschaften der Netzwerke werden bei 25 °C, 60 °C und 100 °C, durch Zug-Dehnungsexperimente bestimmt. Während bei 25 °C semikristalline Materialien vorliegen, befinden sich bei 100 °C die Netzwerke im kautschukelastischen Zustand. Für eine Anwendung als Formgedächtnismaterial sind beide Temperaturbereiche relevant, da sie unterhalb von $T_{trans}$ die mechanischen Eigenschaften des Probekörpers in der permanenten und temporären Form vor der Programmierung und vor erfolgter Rückstellung bestimmen. Im Hinblick auf die Programmierung der temporären Form sind dagegen die mechanischen Eigenschaften oberhalb von $T_{trans}$ von Bedeutung. Durch Zug-Dehnungsexperimente bei 60 °C werden zudem die mechanischen Eigenschaften der Materialien bei der Temperatur erfasst, welche für die Programmierung der zweiten Form zu wählen ist.

Bei 25 °C werden die mechanischen Eigenschaften durch den Glaszustand der Materialien bestimmt. Die Netzwerke aus PPDL, PCL und TMDI zeigen in Zug-Dehnungsexperimenten eine Fließstreckgrenze unter Einschnürung der Probe.

Die E-Module E weisen Werte zwischen 134 MPa und 430 MPa auf. Die Zugfestigkeit $\sigma_{max}$ liegt im Bereich von 15 MPa bis 31 MPa bei Dehnungen $\varepsilon_{max}$ von 6 % bis 16 %. Die Mittelwerte der Bruchdehnung $\varepsilon_b$ werden zwischen 400 % und 1000 % beobachtet. Die mechanischen Charakteristika der untersuchten Netzwerke gemäß Polykondensationsmethode A) werden in Tab. 5 aufgeführt.

Tab. 5 Mechanische Eigenschaften der Polymernetzwerke gemäß Polykondensationsmethode A bei 25 °C, 60 °C und 100 °C.

| Bezeichnung | $\mu_{PPPDL}$ [wt%] | 25 °C | | | 60 °C | | | 100 °C | | |
|---|---|---|---|---|---|---|---|---|---|---|
| | | $E$ [MPa] | $\sigma_b$ [MPa] | $\varepsilon_b$ [%] | $E$ [MPa] | $\sigma_b$ [MPa] | $\varepsilon_b$ [%] | $E$ [MPa] | $\sigma_b$ [MPa] | $\varepsilon_b$ [%] |
| T-PPDL(4) | 100 | 370 ± 87 | 20.9 ± 2.6 | 523 ± 35 | 102 ± 16 | 9.9 ± 1.2 | 690 ± 54 | 0.65 ± 0.13 | 1.25 ± 0.21 | 561 ± 68 |
| T-PPDL(4)-PCL(20,75) | 25 | 273 ± 20 | 29.5 ± 2.3 | 717 ± 22 | 15.8 ± 1.3 | 4.8 ± 0.7 | 441 ± 26 | 1.84 ± 0.28 | 1.33 ± 0.12 | 171 ± 43 |
| T-PPDL(4)-PCL(20,60) | 40 | 332 ± 24 | 24.6 ± 3.9 | 621 ± 86 | 22.4 ± 3.3 | 6.8 ± 1.4 | 484 ± 38 | 2.16 ± 0.30 | 1.80 ± 0.20 | 254 ± 45 |
| T-PPDL(4)-PCL(20,50) | 50 | 319 ± 16 | 30.4 ± 3.5 | 715 ± 43 | 28.9 ± 2.6 | 6.3 ± 0.9 | 463 ± 24 | 1.88 ± 0.26 | 1.91 ± 0.16 | 199 ± 21 |
| T-PPDL(4)-PCL(20,40) | 60 | 272 ± 20 | 28.5 ± 4.7 | 692 ± 59 | 23.3 ± 4.1 | 12.5 ± 2.6 | 588 ± 47 | 2.08 ± 0.60 | 1.18 ± 0.28 | 117 ± 7 |
| T-PPDL(4)-PCL(20,25) | 75 | 300 ± 15 | 32.4 ± 4.2 | 664 ± 59 | 35.1 ± 3.0 | 8.2 ± 0.8 | 489 ± 22 | 2.36 ± 0.22 | 1.43 ± 0.22 | 151 ± 30 |
| T-PPDL(4)-PCL(8,75) | 25 | 101 ± 16 | 20.3 ± 4.0 | 587 ± 49 | 8.0 ± 0.7 | 5.0 ± 0.8 | 292 ± 48 | 3.75 ± 0.35 | 2.12 ± 0.31 | 126 ± 20 |
| T-PPDL(4)-PCL(8,60) | 40 | 185 ± 18 | 27.8 ± 4.3 | 665 ± 59 | 7.3 ± 1.3 | 6.1 ± 0.7 | 471 ± 30 | 3.25 ± 0.08 | 1.92 ± 0.23 | 159 ± 41 |
| T-PPDL(4)-PCL(8,50) | 50 | 207 ± 18 | 23.6 ± 2.6 | 764 ± 29 | 12.7 ± 2.5 | 7.5 ± 0.9 | 616 ± 23 | 2.41 ± 0.31 | 1.23 ± 0.25 | 103 ± 18 |
| T-PPDL(4)-PCL(8,40) | 60 | 257 ± 49 | 24.8 ± 3.5 | 707 ± 85 | 21.1 ± 6.7 | 6.3 ± 2.0 | 549 ± 43 | 1.97 ± 0.20 | 1.33 ± 0.13 | 206 ± 54 |
| T-PPDL(4)-PCL(8,25) | 75 | 340 ± 33 | 25.8 ± 2.5 | 693 ± 46 | 45.8 ± 8.4 | 9.1 ± 1.1 | 557 ± 62 | 1.79 ± 0.12 | 1.22 ± 0.18 | 230 ± 52 |
| T-PPDL(4)-PCL(4,75) | 25 | 73 ± 15 | 20.5 ± 2.0 | 673 ± 28 | 6.7 ± 0.9 | 2.9 ± 0.6 | 151 ± 40 | 3.38 ± 0.26 | 1.33 ± 0.10 | 65 ± 10 |
| T-PPDL(4)-PCL(4,60) | 40 | 179 ± 17 | 27.1 ± 2.5 | 714 ± 27 | 16.1 ± 5.8 | 3.4 ± 0.5 | 228 ± 39 | 2.98 ± 0.11 | 1.54 ± 0.07 | 103 ± 9 |
| T-PPDL(4)-PCL(4,50) | 50 | 131 ± 21 | 21.2 ± 3.4 | 486 ± 42 | 18.2 ± 3.8 | 4.3 ± 1.0 | 263 ± 37 | 2.53 ± 0.21 | 1.80 ± 0.14 | 206 ± 40 |
| T-PPDL(4)-PCL(4,40) | 60 | 154 ± 10 | 24.9 ± 1.9 | 562 ± 32 | 34.1 ± 7.0 | 7.5 ± 1.9 | 346 ± 40 | 2.23 ± 0.12 | 1.33 ± 0.16 | 155 ± 30 |
| T-PPDL(4)-PCL(4,25) | 75 | 274 ± 22 | 25.3 ± 3.9 | 691 ± 57 | 59.8 ± 6.2 | 8.9 ± 0.7 | 521 ± 39 | 1.47 ± 0.13 | 1.01 ± 0.16 | 188 ± 48 |
| T-PPDL(3)-PCL(20,75) | 25 | 305 ± 43 | 25.2 ± 3.5 | 691 ± 51 | 2.3 ± 0.2 | 2.3 ± 0.3 | 457 ± 50 | 0.87 ± 0.07 | 0.95 ± 0.13 | 286 ± 62 |
| T-PPDL(3)-PCL(20,50) | 50 | 282 ± 21 | 19.7 ± 2.7 | 543 ± 36 | 10.5 ± 0.9 | 3.8 ± 0.2 | 461 ± 19 | 0.92 ± 0.02 | 0.83 ± 0.06 | 235 ± 23 |
| T-PPDL(3)-PCL(20,25) | 75 | 242 ± 23 | 31.2 ± 5.0 | 595 ± 53 | 20.7 ± 1.9 | 8.4 ± 1.3 | 503 ± 39 | 1.79 ± 0.10 | 1.20 ± 0.10 | 146 ± 22 |
| T-PPDL(3)-PCL(8,75) | 25 | 37 ± 7 | 11.0 ± 2.9 | 425 ± 99 | 4.3 ± 0.3 | 2.3 ± 0.2 | 140 ± 24 | 4.82 ± 0.19 | 1.72 ± 0.35 | 57 ± 17 |
| T-PPDL(3)-PCL(8,50) | 50 | 64 ± 12 | 15.9 ± 1.9 | 433 ± 26 | 9.9 ± 0.6 | 4.4 ± 0.5 | 226 ± 32 | 4.29 ± 0.19 | 1.62 ± 0.23 | 62 ± 17 |
| T-PPDL(3)-PCL(8,25) | 75 | 97 ± 13 | 23.7 ± 2.3 | 437 ± 23 | 3.9 ± 0.1 | 5.9 ± 0.9 | 260 ± 46 | 3.70 ± 0.10 | 1.82 ± 0.19 | 92 ± 16 |
| T-PPDL(3)-PCL(4,75) | 25 | 58 ± 9 | 20.8 ± 4.5 | 525 ± 48 | 3.0 ± 0.4 | 1.7 ± 0.2 | 140 ± 36 | 2.60 ± 0.11 | 1.07 ± 0.16 | 67 ± 15 |
| T-PPDL(3)-PCL(4,50) | 50 | 67 ± 10 | 18.6 ± 3.5 | 423 ± 57 | 12.9 ± 1.5 | 4.6 ± 0.7 | 164 ± 43 | 3.40 ± 0.12 | 1.47 ± 0.11 | 69 ± 9 |

(fortgesetzt)

| Bezeichnung | $\mu_{PPDL}$ [wt%] | 25 °C | | | 60 °C | | | 100 °C | | |
|---|---|---|---|---|---|---|---|---|---|---|
| | | $E$ [MPa] | $\sigma_b$ [MPa] | $\varepsilon_b$ [%] | $E$ [MPa] | $\sigma_b$ [MPa] | $\varepsilon_b$ [%] | $E$ [MPa] | $\sigma_b$ [MPa] | $\varepsilon_b$ [%] |
| T-PPDL(3)-PCL(4,25) | 75 | 84 ± 11 | 23.4 ± 6.9 | 405 ± 47 | 19.7 ± 1.3 | 6.1 ± 0.4 | 195 ± 11 | 3.75 ± 0.11 | 1.67 ± 0.38 | 83 ± 30 |
| T-PPDL(2)-PCL(20,75) | 25 | 178 ± 55 | 17.2 ± 5.5 | 684 ± 91 | 1.5 ± 0.2 | 2.0 ± 0.4 | 521 ± 68 | 1.44 ± 0.07 | 1.04 ± 0.20 | 188 ± 64 |
| T-PPDL(2)-PCL(20,50) | 50 | 206 ± 12 | 24.4 ± 3.2 | 784 ± 52 | 4.3 ± 0.9 | 3.7 ± 0.5 | 614 ± 51 | 1.28 ± 0.07 | 0.97 ± 0.09 | 207 ± 36 |
| T-PPDL(2)-PCL(20,25) | 75 | 134 ± 10 | 26.6 ± 4.4 | 649 ± 20 | 5.7 ± 1.9 | 4.7 ± 1.1 | 463 ± 34 | 2.28 ± 0.08 | 1.16 ± 0.15 | 110 ± 30 |
| T-PPDL(2)-PCL(8,75) | 25 | 23 ± 4 | 9.7 ± 1.4 | 384 ± 49 | 4.0 ± 0.1 | 2.0 ± 0.4 | 107 ± 35 | 4.74 ± 0.29 | 1.36 ± 0.36 | 42 ± 20 |
| T-PPDL(2)-PCL(8,50) | 50 | 52 ± 12 | 13.6 ± 2.5 | 459 ± 70 | 3.4 ± 0.2 | 2.0 ± 0.5 | 141 ± 58 | 4.03 ± 0.17 | 1.53 ± 0.34 | 66 ± 22 |
| T-PPDL(2)-PCL(8,25) | 75 | 76 ± 10 | 24.0 ± 6.2 | 605 ± 34 | 3.1 ± 0.2 | 2.7 ± 0.6 | 270 ± 68 | 3.18 ± 0.21 | 1.33 ± 0.23 | 71 ± 18 |
| T-PPDL(2)-PCL(4,75) | 25 | 18 ± 12 | 15.8 ± 3.6 | 502 ± 31 | 2.6 ± 0.2 | 1.5 ± 0.4 | 110 ± 42 | 2.68 ± 0.06 | 1.11 ± 0.13 | 67 ± 13 |
| T-PPDL(2)-PCL(4,50) | 50 | 15 ± 3 | 19.1 ± 3.1 | 606 ± 23 | 3.1 ± 0.3 | 1.9 ± 0.2 | 161 ± 21 | 2.84 ± 0.05 | 1.07 ± 0.19 | 59 ± 18 |
| T-PPDL(2)-PCL(4,25) | 75 | 65 ± 17 | 21.8 ± 3.1 | 616 ± 67 | 3.6 ± 0.5 | 3.8 ± 0.4 | 396 ± 44 | 1.99 ± 0.07 | 0.92 ± 0.11 | 76 ± 16 |

Tab. 6 Mechanischen Eigenschaften der Netzwerke gemäß Polymerisationsmethode B)

| Bezeichnung | $\mu_{PPPDL}$ [wt%] | 25 °C | | | 60 °C | | | 100 °C | | |
|---|---|---|---|---|---|---|---|---|---|---|
| | | $E$ [MPa] | $\sigma_b$ [MPa] | $\varepsilon_b$ [%] | $E$ [MPa] | $\sigma_b$ [MPa] | $\varepsilon_b$ [%] | $E$ [MPa] | $\sigma_b$ [MPa] | $\varepsilon_b$ [%] |
| P-PPDL(4)-PCL(20, 75) | 25 | 245 ± 5 | 17.2 ± 4.4 | 160 ± 84 | 3.7 ± 0.4 | 3.8 ± 0.6 | 180 ± 25 | 2.03 ± 0.39 | 1.41 ± 0.51 | 90 ± 20 |
| P-PPDL(4)-PCL(20, 60) | 40 | 270 ± 18 | 9.7 ± 0.7 | 4.3 ± 0.5 | 6.1 ± 0.4 | 1.1 ± 0.2 | 70 ± 12 | 1.54 ± 0.20 | 0.70 ± 0.04 | 60 ± 10 |
| P-PPDL(4)-PCL(20, 50) | 50 | 200 ± 10 | 12.8 ± 0.8 | 11 ± 1.7 | 10.1 ± 6.7 | 1.2 ± 0.3 | 30 ± 15 | 1.25 ± 0.05 | 0.79 ± 0.18 | 80 ± 14 |
| P-PPDL(4)-PCL(20, 40) | 60 | 289 ± 34 | 8.0 ± 1.0 | 3.3 ± 0.6 | 6.8 ± 2.9 | 1.0 ± 0.1 | 40 ± 39 | 1.58 ± 0.56 | 0.60 ± 0.37 | 45 ± 22 |
| P-PPDL(4)-PCL(20, 25) | 75 | 273 ± 11 | 11.7 ± 0.65 | 28 ± 11 | 26.0 ± 2.1 | 2.5 ± 2.9 | 30 ± 8 | 2.19 ± 0.17 | 1.06 ± 0.03 | 65 ± 2 |
| P-PPDL(4)-PCL(20, 12) | 88 | 121 ± 4 | 8.2 ± 0.4 | 60 ± 11 | 22.8 ± 4.8 | 2.7 ± 0.4 | 23 ± 10 | 3.62 ± 0.64 | 1.24 ± 0.68 | 52 ± 15 |
| P-PPDL(4)-PCL(8, 75) | 25 | 121 ± 4.2 | 8.3 ± 3.7 | 63 ± 11 | 6.69 ± 1.68 | 1.5 ± 0.8 | 48 ± 14 | 4.46 ± 1.12 | 1.43 ± 0.55 | 44 ± 2 |
| P-PPDL(4)-PCL(8, 60) | 40 | 181 ± 15 | 8.8 ± 1.0 | 25 ± 30 | 9.56 ± 6.23 | 1.3 ± 0.6 | 20 ± 3 | 2.52 ± 0.58 | 0.56 ± 0.50 | 30 ± 20 |
| P-PPDL(4)-PCL(8, 50) | 50 | 126 ± 30 | 9.9 ± 1.6 | 90 ± 24 | 11.7 ± 1.02 | 2.6 ± 0.4 | 46 ± 12 | 4.69 ± 0.29 | 1.53 ± 0.58 | 40 ± 13 |
| P-PPDL(4)-PCL(8, 40) | 60 | 241 ± 10 | 7.0 ± 1.4 | 4 ± 1 | 21.4 ± 4.4 | 1.2 ± 0.3 | 9 ± 4 | 1.89 ± 0.16 | 0.62 ± 0.03 | 42 ± 7 |
| P-PPDL(4)-PCL(8, 25) | 75 | 203 ± 25 | 9.4 ± 1.1 | 37 ± 38 | 23.9 ± 1.2 | 2.0 ± 0.2 | 18 ± 4 | 2.2 ± 0.3 | 0.45 ± 0.24 | 22 ± 13 |

**Drei-Formengedächtnis-Eigenschaften der Polymernetzwerke**

Experiment A

Bei beiden Synthesemethoden (A und B) wird durch die Vernetzung die permanente Form (1. Form) festgelegt. Durch rechtwinkliges Abknicken eines Probenendes bei 100 °C und anschließenden Abkühlen auf 60 °C wird die 1. Programmierung durchgeführt (2. Form). Durch rechtwinkliges Abknicken des zweiten Probenendes bei 60 °C und anschließendem Abkühlen auf 0 °C wird die 2. Programmierung durchgeführt (3. Form). Beim Einlegen eines so programmierten Probekörpers in ein Wasserbad mit einer Temperatur von 60 °C erfolgt zunächst die Rückstellung der Probenseite mit der niedrigeren $T_{switch}$ (2. Form). Dieser Prozess erfordert das Erreichen der Schalttemperatur im Probekörper und dauert nur wenige Sekunden. Die andere Probenseite bleibt unverändert. Bei Erhöhung der Temperatur des Wasserbades bzw. Eintauchen in ein zweites Wasserbad mit 100 °C erfolgt auch die Rückstellung der zweiten Probenseite zum insgesamt wieder ebenen Körper (1. Form).

Experiment B

Die quantitative Untersuchung des Drei-Formengedächtnis-Effektes erfolgt durch zyklische thermomechanische Zug-Dehnungsexperimente, wie sie in Bellin et al. (siehe oben) beschrieben werden. Die Formgedächtniseigenschaften der Netzwerke aus PPDL(y) und PCL(x) mit variierender Molmasse ermittelt durch spannungsgeregelte, zyklische thermomechanische Zug-Dehnungsexperimente sind in Tab. 7 aufgeführt. Die Untersuchungen zeigen, dass diese Materialien Dehnungsfixierungs- und Dehnungsrückstellungsverhältnisse von über 90 % in allen Zyklen aufweisen.

Die verwendeten Polymere können biostabil oder auch bioabbaubar sein. Für den medizinischen Einsatz sind Multiblockcopolymere bekannt, deren Schalttemperatur im Bereich der menschlichen Körpertemperatur liegt.

Tab. 7 Drei-Formengedächtnis-Eigenschaften der Polymernetzwerke gemäß Polykondensationsmethode A. $R_f$ und $R_r$ sind Mittelwerte aus den Zyklen 2 bis 5. Die Schalttemperaturen sind Mittelwerte aus allen 5 Zyklen.

| Bezeichnung | $R_f(C{\rightarrow}B)$ [%] | $R_f(B{\rightarrow}A)$ [%] | $R_r(A{\rightarrow}B)$ [%] | $R_r(A{\rightarrow}C)$ [%] | $T_{sw1}$ [°C] | $T_{sw2}$ [°C] |
|---|---|---|---|---|---|---|
| T-PPDL(4)-PCL(20,75) | 74.5 ± 1.0 | 99.0 ± 0.1 | 56.2 ± 1.0 | 96.3 ± 7.0 | 66.0 ± 0.8 | 85.3 ± 1.1 |
| T-PPDL(4)-PCL(20,60) | 80.1 ± 0.5 | 98.2 ± 0.1 | 81.1 ± 0.7 | 101.0 ± 0.5 | 61.0 ± 0.5 | 84.4 ± 0.5 |
| T-PPDL(4)-PCL(20,50) | 72.5 ± 0.8 | 97.6 ± 0.2 | 80.5 ± 1.0 | 99.0 ± 1.0 | 61.1 ± 0.3 | 85.4 ± 0.3 |
| T-PPDL(4)-PCL(20,40) | 82.1 ± 1.6 | 96.3 ± 0.1 | 85.1 ± 0.7 | 99.9 ± 3.2 | 59.2 ± 0.4 | 86.2 ± 0.5 |
| T-PPDL(4)-PCL(20,25) | 91.5 ± 0.1 | 91.4 ± 1.0 | 78.8 ± 0.8 | 98.5 ± 2.2 | 62.1 ± 0.7 | 85.8 ± 0.5 |
| T-PPDL(4)-PCL(8,75) | 17.6 ± 0.9 | 94.2 ± 1.4 | 88.0 ± 2.1 | 99.8 ± 0.6 | 39.9 ± 0.7 | 70.5 ± 0.1 |
| T-PPDL(4)-PCL(8,60) | 64.2 ± 2.8 | 96.2 ± 0.3 | 88.2 ± 0.9 | 101.1 ± 1.6 | 48.0 ± 0.4 | 76.3 ± 0.4 |
| T-PPDL(4)-PCL(8,50) | 75.2 ± 0.6 | 95.7 ± 0.3 | 84.1 ± 0.7 | 100.1 ± 0.5 | 55.4 ± 0.8 | 81.8 ± 0.3 |
| T-PPDL(4)-PCL(8,40) | 86.6 ± 0.2 | 91.6 ± 0.2 | 88.3 ± 2.1 | 99.1 ± 3.8 | 56.5 ± 0.9 | 83.9 ± 0.4 |
| T-PPDL(4)-PCL(8,25) | 93.8 ± 0.3 | 89.5 ± 0.2 | 80.2 ± 1.0 | 100.1 ± 2.6 | 61.1 ± 0.6 | 84.1 ± 0.4 |
| T-PPDL(4)-PCL(4,75) | 2.0 ± 0.9 | 97.7 ± 0.1 | 76.5 ± 0.8 | 99.8 ± 0.3 | 36.7 ± 0.4 | 68.8 ± 0.3 |
| T-PPDL(4)-PCL(4,60) | 75.5 ± 1.3 | 95.2 ± 0.3 | 81.1 ± 1.5 | 100.5 ± 1.2 | 48.5 ± 0.5 | 82.1 ± 1.1 |
| T-PPDL(4)-PCL(4,50) | 84.9 ± 1.0 | 93.2 ± 3.7 | 68.1 ± 2.3 | 100.5 ± 0.8 | 48.0 ± 1.0 | 76.4 ± 1.0 |
| T-PPDL(4)-PCL(4,40) | 82.0 ± 0.8 | 92.0 ± 0.3 | 75,6 ± 4.3 | 99.2 ± 1.0 | 56.3 ± 0.9 | 75.9 ± 0.1 |
| T-PPDL(4)-PCL(4,25) | 93.1 ± 0.2 | 81.7 ± 4.1 | 83.8 ± 1.7 | 99.4 ± 2.4 | 59.5 ± 1.2 | 83.1 ± 0.4 |

Experiment C

Zur Bestimmung der Einschritt-Programmierungseigenschaften der Drei-Formengedächtnis-Netzwerke wird die Probe bei der Temperatur $T_{high}$ von der permanenten Form C mit der Dehnung $\varepsilon_C$ in die Form $\varepsilon^0_A$ gedehnt, es wird 7 Minuten gewartet und anschließend spannungskontrolliert mit einer Abkühlrate von 5 K·min⁻¹ abgekühlt, wobei die Probe die Dehnung $\varepsilon^0_{Aload}$ annimmt. Nach 10 Minuten wird die Probe entlastet, was in der Dehnung $\varepsilon_A$ bzw. der Form A resultiert. Anschließend erfolgt die Rückstellung der Probe, wie in Bellin et al. beschrieben.

$$R_f(N) = \frac{\varepsilon_A(N) - \varepsilon_C(N-1)}{\varepsilon_{Aload}(N) - \varepsilon_C(N-1)} \tag{1}$$

$$R_r(N) = \frac{\varepsilon_A(N) - \varepsilon_C(N)}{\varepsilon_A(N) - \varepsilon_C(N-1)} \tag{2}$$

Tab. 8 Formgedächtniseigenschaften der Polymernetzwerke gemäß Polykondensationsmethode A nach Einschritt-Programmierung.

| Bezeichnung | $R_f$ [%] | $R_r$ [%] | $T_{sw1}$ [°C] | $T_{sw2}$ [°C] |
|---|---|---|---|---|
| T-PPDL(4)-PCL(20,60) | 97.2 ± 0.4 | 98.8 ± 0.8 | 60.6 ± 0.1 | 80.2 ± 0.6 |
| T-PPDL(4)-PCL(8,60) | 98.2 ± 0.2 | 98.2 ± 0.9 | 49.8 ± 0.2 | 75.4 ± 0.4 |
| T-PPDL(4)-PCL(4,50) | 95.8 ± 0.3 | 99.3 ± 0.2 | 46.5 ± 0.8 | 78.3 ± 0.3 |

Experiment D

Zur Bestimmung der Drei-Formengedächtnis-Eigenschaften bei kaltem Verstrecken wird die Probe bei der Temperatur $T_{low}$ von der permanenten Form C mit der Dehnung $\varepsilon_C$ in die Form $\varepsilon^0_A$ gedehnt, 5 Minuten unter Spannung gehalten und dann entlastet, wobei die Probe die Dehnung $\varepsilon_A$ bzw. die Form A annimmt. Anschließend erfolgt die Rückstellung der Probe wie in Bellin et al. beschrieben. Der Zyklus wird viermal wiederholt, das Dehnungsfixierungsverhältnis $R_f$ und das Dehnungsrückstellungsverhältnis $R_r$ im Zyklus N werden, wie in Experiment C beschrieben, bestimmt.

Tab. 9 Formgedächtniseigenschaften der Polymernetzwerke gemäß Polykondensationsmethode A nach Kaltverstreckung.

| Bezeichnung | $R_f$ [%] | $R_r$ [%] | $T_{sw1}$ [°C] | $T_{sw2}$ [°C] |
|---|---|---|---|---|
| T-PPDL(4)-PCL(20,75) | 78.8 ± 0.2 | 99.8 ± 0.3 | 62.1 ± 0.1 | 83.5 ± 0.5 |
| T-PPDL(4)-PCL(20,50) | 76.9 ± 0.3 | 99.9 ± 1.1 | 60.3 ± 0.3 | 75.8 ± 0.5 |
| T-PPDL(4)-T-PCL(8,50) | 72.2 ± 0.3 | 99.7 ± 0.2 | 56.1 ± 0.6 | 82.6 ± 0.4 |
| PPDL(4)-PCL(4,50) | 64.8 ± 0.3 | 97.7 ± 0.5 | 47.8 ± 0.6 | 81.5 ± 0.3 |

Experiment E

Zur Bestimmung der Formgedächtnis-Eigenschaften wurde ein vierfach zyklisches thermomechanisches Experiment geschaffen. Hierzu wurde die Probe bei $T_{prog}$ von der permanenten Form C mit der Dehnung $\varepsilon_C$ in die Form $\varepsilon^0_A$ gedehnt (100 % bzw. 150 %), 5 Minuten unter Spannung gehalten und anschließend spannungskontrolliert mit einer Abkühlrate von 5 K·min$^{-1}$ abgekühlt, wobei die Probe die Dehnung $\varepsilon^0_{Aload}$ annimmt. Nach 10 Minuten wird die Probe entlastetet, was in der Dehnung $\varepsilon_A$ bzw. der Form A resultiert. Die Rückstellung erfolgt durch Aufheizen auf $T_{high}$ = 115 °C mit einer Heizrate von 1 K·min$^{-1}$. Um die vorherige thermische Geschichte der Probe zu eliminieren, wurde im ersten Zyklus $T_{prog}$ = 90 °C gewählt. In den nachfolgenden drei Zyklen wurde für $T_{prog}$ 30, 60 und 90 °C gewählt. Die Schaltemperaturen wurden, wie in Experiment B beschrieben, bestimmt.

Table 10. Temperaturgedächtniseigenschaften der Polymernetzwerke gemäß Polykondensationsmethode A.

| Bezeichnung | $T_{prog}$ = 30 °C | | | $T_{prog}$ = 60 °C | | | $T_{prog}$ = 90 °C | | |
|---|---|---|---|---|---|---|---|---|---|
| | $R_f$ [%] | $R_r$ [%] | $T_{sw}$ [°C] | $R_f$ [%] | $R_r$ [%] | $T_{sw}$ [°C] | $R_f$ [%] | $R_r$ [%] | $T_{sw}$ [°C] |
| T-PPDL(4)-PCL(8,25) | 81.9 | 98.1 | 29.2 | 93.4 | 96.9 | 59.0 | 98.6 | 99.6 | 78.4 |
| T-PPDL(4)-PCL(4,40) | 81.6 | 100.2 | 28.6 | 91.4 | 97.3 | 59.3 | 97.4 | 99.9 | 75.0 |
| T-PPDL(4)-PCL(4,25) | 81.1 | 97.6 | 29.1 | 92.0 | 101.8 | 59.0 | 98.4 | 101.0 | 81.1 |

Experiment F

Zur Bestimmung der reversiblen Drei-Formengedächtnis-Eigenschaften unter konstanter Spannung wird die Probe bei $T_{high}$ von der permanenten Form C mit der Spannung $\sigma_C$ in die Form $\varepsilon^0_C$ gedehnt. Es wird 10 Minuten gewartet und bei konstanter Spannung $\sigma_C$ mit einer Abkühlrate von 0,1 bis 2 K/min auf $T_{low}$ abgekühlt, was in einer zweistufigen Ausdehnung der Probe zu den Formen B und A mit den Dehnungen $\varepsilon_B$ und $\varepsilon_A$ resultiert. Nach 10 Minuten bei $T_{low}$ wird mit einer Heizrate von 1 K/min auf $T_{high}$ erwärmt wobei stufenweise die Formen B und C zurückgestellt werden.

Tab. 11 Reversible Drei-Formengedächtnis-Eigenschaften der Polymernetzwerke gemäß Polykondensationsmethode A unter konstanter Spannung.

| Netzwerk-ID | $\sigma_c$ [MPa] | $T_{sw}(C{\rightarrow}B)$ [°C] | $T_{sw}(B{\rightarrow}A)$ [°C] | $T_{sw}(A{\rightarrow}B)$ [°C] | $T_{sw}(B{\rightarrow}C)$ [°C] | $\Delta\varepsilon_{rel}(A{\rightarrow}B)$ [%] | $\Delta\varepsilon_{rel}(B{\rightarrow}C)$ [%] |
|---|---|---|---|---|---|---|---|
| T-PPDL(4)-PCL(8,50) | 0.6 | 69.4 | 37.3 | 45.3 | 78.5 | 9 | 91 |
| T-PPDL(3)-PCL(8,50) | 1.0 | 60.5 | 32.6 | 43.2 | 75.7 | 22 | 78 |

**Patentansprüche**

1. Polymernetzwerk mit Drei-Formengedächtnis-Effekt enthaltend

   A) ein erstes kristallines Schaltsegment aus einem Sternpolymer auf Basis von Poly(pentadecalacton) (PPDL-Segment); und
   B) ein zweites kristallines Schaltsegment aus einem linearen Polymer oder einem Sternpolymer auf Basis von Poly($\varepsilon$-caprolacton) (PCL-Segment) oder Polytetrahydrofuran (PTHF-Segment).

2. Polymernetzwerk nach einem der vorhergehenden Ansprüche, bei dem die Schmelzpunkte der beiden kristallinen Schaltsegmente im Bereich von 0 °C bis 100 °C liegen.

3. Polymernetzwerk nach einem der vorhergehenden Ansprüche, bei dem das erste kristalline Schaltsegment ein mittleres Molekulargewicht (mittels GPC bestimmt) im Bereich von 500 bis 50.000 g/mol aufweist.

4. Polymernetzwerk nach einem der vorhergehenden Ansprüche, bei dem das zweite kristalline Schaltsegment ein mittleres Molekulargewicht (mittels GPC bestimmt) im Bereich von 500 bis 50.000 g/mol aufweist.

5. Polymernetzwerk nach einem der vorhergehenden Ansprüche, bei dem ein Anteil der einzelnen Schaltsegmente am Gesamtgewicht der kristallinen Schaltsegmente im Polymernetzwerk 20 bis 80 Gew.-% beträgt.

6. Sternpolymer auf Basis von Poly(pentadecalacton) mit jeweils einer terminalen Funktionalität an jedem Seitenarm.

7. Verfahren zur Programmierung eines Polymernetzwerks mit Drei-Formengedächtnis-Effekt, das ein erstes kristallines Schaltsegment aus einem Sternpolymer und ein zweites kristallines Schaltsegment aus einem linearen Polymer oder einem Sternpolymer enthält, umfassend den Schritt:

   Programmierung von mindestens zwei unterschiedlichen Formen des Polymernetzwerks durch

   b) eine Einschritt-Methode;
   c) kaltes Verstrecken; oder
   d) eine Kombination von Erwärmen und kaltem Verstrecken.

8. Verfahren nach Anspruch 7, bei dem die Programmierung nach der Ein-Schritt Methode erfolgt, wobei das Polymernetzwerk auf $T_{high}$ oberhalb der beiden Schmelztemperaturen $T_{m,1}$ und $T_{m,2}$ der kristallinen Schaltsegmente aufgeheizt ($T_{m,1} < T_{m,2}$), deformiert und dann auf eine Temperatur unterhalb $T_{m,1}$ abgekühlt wird.

9. Verfahren nach Anspruch 7, bei dem die Programmierung durch kaltes Verstrecken erfolgt, wobei das Polymernetzwerk bei einer Temperatur $T_{low}$ unterhalb der beiden Schmelztemperaturen $T_{m,1}$ und $T_{m,2}$ der kristallinen Schaltsegmente ($T_{low} << T_{m,1} < T_{m,2}$) deformiert wird.

10. Verfahren nach Anspruch 7, bei dem die Programmierung durch eine Kombination von Erwärmen und kaltem Verstrecken erfolgt, wobei das Polymernetzwerk bei einer Temperatur $T_{mid}$, die zwischen den beiden Schmelztemperaturen $T_{m,1}$ und $T_{m,2}$ der kristallinen Schaltsegmente liegt ($T_{m,1} < T_{mid} < T_{m,2}$), deformiert wird.

**11.** Verfahren zur Rückstellung eines programmierten Polymernetzwerks mit Drei-Formengedächtnis-Effekt nach einem der Ansprüche 1 bis 5, umfassend den Schritt: thermische Behandlung des programmierten Polymernetzwerks in Wasser als Wärmeträger.

**Claims**

**1.** Polymeric network with triple shape memory effect, containing

A) a first crystalline switching segment made of a starpolymer based on poly(pentadecalactone) (PPDL segment); and
B) a second crystalline switching segment consisting of a linear polymer or a star polymer based on poly($\varepsilon$-caprolactone) (PCL segment) or polytetrahydrofuran (PTHF segment).

**2.** Polymer network according to one of the preceding claims, in which the melting points of the two crystalline switching segments are in a range from 0°C to 100°C.

**3.** Polymer network according to one of the preceding claims, in which the first crystalline switching segment has an average molecular weight (determined by means of GPC) in a range from 500 to 50,000 g/mol.

**4.** Polymer network according to one of the preceding claims, in which the second crystalline switching segment has an average molecular weight (determined by means of GPC) in a range from 500 to 50,000 g/mol.

**5.** Polymer network according to one of the preceding claims, in which a fraction of the individual switching segments of the total weight of the crystalline switching segments in the polymer network is 20 to 80 wt%.

**6.** Star polymer based on poly(pentadecalactone), each having a terminal functionality on each side arm.

**7.** Method for programming a polymer network with triple shape memory effect containing a first crystalline switching segment consisting of a star polymer and a second crystalline switching segment containing a linear polymer or a starpolymer, comprising the step:

programming at least two different shapes of the polymer network with

b) a one-step method;
c) cold stretching;
d) a combination of heating and cold stretching.

**8.** Method according to claim 7, in which the programming is performed according to the one-step method, wherein the polymer network is heated to $T_{high}$ above both melting temperatures $T_{m,1}$ and $T_{m,2}$ of the crystalline switching segments ($T_{m,1} < T_{m,2}$), deformed, and then cooled to a temperature below $T_{m,1}$.

**9.** Method according to claim 7, in which the programming is performed by cold stretching, wherein the polymer network is deformed at a temperature $T_{kw}$ below both melting temperatures $T_{m,1}$ and $T_{m,2}$ of the crystalline switching segments ($T_{kw} << T_{m,1} < T_{m,2}$).

**10.** Method according to claim 7, wherein the programming is performed with a combination of heating and cold stretching, wherein the polymer network is deformed at a temperature $T_{mi}$ between the two melting temperatures $T_{m,1}$ and $T_{m,2}$ of the crystalline switching segments ($T_{m,1} < T_{mid} < T_{m,2}$).

**11.** Method for restoring a programmed polymer network having a triple shape memory effect according to one of claims 1 to 5, comprising the step: thermal treatment of the programmed polymer network in water as the heat carrier.

**Revendications**

**1.** Réseau de polymère avec mémoire de triple forme, contenant

A) un premier segment de commutation cristallin composé d'un polymère en étoile à base de poly(pentadécalactone) (segment PPDL) ; et
B) un second segment de commutation cristallin composé d'un polymère linéaire ou d'un polymère en étoile à base de poly($\varepsilon$-caprolactone se font) (segment PCL) ou de polytétrahydrofurane (segment PTHF).

2. Réseau de polymère selon une des revendications précédentes, dans lequel les points de fusion des deux segments de commutation cristallins se situent dans la plage de 0 °C à 100 °C.

3. Réseau de polymère selon une des revendications précédentes, dans lequel le premier segment de commutation cristallin présente un poids moléculaire moyen (déterminé par GPC) de l'ordre de 500 à 50 000 g/mole.

4. Réseau de polymère selon une des revendications précédentes, dans lequel le second segment de commutation cristallin présente un poids moléculaire moyen (déterminé par GPC) de l'ordre de 500 à 50 000 g/mole.

5. Réseau de polymère selon une des revendications précédentes, dans lequel une partie des segments de commutation individuels représente 20 à 80 % en poids du poids total des segments de commutation cristallins dans le réseau de polymère.

6. Polymère en étoile à base de poly(pentadécalactone) doté respectivement d'une fonctionnalité terminale au niveau de chaque bras latéral.

7. Procédé de programmation d'un réseau de polymère avec mémoire de triple forme qui contient un premier segment de commutation cristallin composé d'un polymère en étoile et un second segment de commutation cristallin composé d'un polymère linéaire ou d'un polymère en étoile, comprenant l'étape de :

   programmation d'au moins deux formes différentes du réseau de polymère par

      b) un procédé en une étape ;
      c) un étirage à froid ; ou
      d) une combinaison de réchauffement et d'étirage à froid.

8. Procédé selon la revendication 7, dans lequel la programmation a lieu d'après le procédé à une étape, le réseau de polymère étant chauffé à $T_{high}$ au-dessus des deux températures de fusion $T_{m,1}$ et $T_{m,2}$ des segments de commutation cristallins ($T_{m,1} < T_{m,2}$), déformé puis refroidi à une température inférieure à $T_{m,1}$.

9. Procédé selon la revendication 7, dans lequel la programmation a lieu d'après le procédé de l'étirage à froid, le réseau de polymère étant déformé à une température $T_{low}$ en-dessous des deux températures de fusion $T_{m,1}$ et $T_{m,2}$ des segments de commutation cristallins ($T_{low} << T_{m,1} < T_{m,2}$).

10. Procédé selon la revendication 7, dans lequel la programmation a lieu par combinaison de réchauffement et d'étirage à froid, le réseau de polymère étant déformé à une température $T_{mid}$ qui se situe entre les deux températures de fusion $T_{m,1}$ et $T_{m,2}$ des segments de commutation cristallins ($T_{m,1} < T_{mid} < T_{m,2}$).

11. Procédé de réinitialisation d'un réseau de polymère programmé avec mémoire de triple forme selon une des revendications 1 à 5, comprenant l'étape de : traitement thermique du réseau de polymère programmé dans de l'eau servant de caloporteur.

Fig. 1

PCL
PPDL

Vernetzer

Fig. 2A

PCL
PPDL

Vernetzungsstelle
(Meth)acrylat

Fig. 2B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BELLIN, I. et al.** Polymeric triple-shape materials. *PNAS,* 2006, vol. 103 (48), 18043-18047
- **LENDLEIN, A. ; LANGER, R.** Biodegradable, elastic shape-memory polymers for potential biomedical applications. *Science,* 2002, vol. 296 (5573), 1673-1676
- **LENDLEIN, A. ; KELCH, S.** Degradable, Multifunctional Polymeric Biomaterials with Shape-memory. *Materials Science Forum,* 2005, vol. 492-493, 219-224
- **ARVANITOYANNIS, I. et al.** Novel Star-Shaped Polylactide with Glycerol Using Stannous Octoate or Tetraphenyl Tin as Catalyst 1. Synthesis, Characterization and Study of Their Biodegradability. *Polymer,* 1995, vol. 36 (15), 2947-2956